# EUROPÄISCHE PATENTSCHRIFT

(11) **EP 1 919 433 B1**
(45) Veröffentlichungstag und Bekanntmachung des Hinweises auf die Patenterteilung: **23.05.2012**
(21) Anmeldenummer: 06792551.1
(22) Anmeldetag: 24.07.2006
(51) Int. Cl.: A61J 3/07, B65B 1/38, G01N 21/35, G01N 21/85

(54) **Sensiervorrichtung**
Sensing facility
Système de détection

(30) Priorität: 23.08.2005 DE 102005039765
(43) Veröffentlichungstag der Anmeldung: 14.05.2008
(73) Patentinhaber: ROBERT BOSCH GMBH, 70442 Stuttgart (DE)
(72) Erfinder: SCHMIED, Ralf, 71691 Freiberg (DE); RUNFT, Werner, 71364 Winnenden (DE)
(86) Internationale Anmeldenummer: PCT/EP2006/064575
(87) Internationale Veröffentlichungsnummer: WO 2007/023055

(56) Entgegenhaltungen:
- EP-A2- 0 837 313
- DE-A1- 3 441 856
- DE-A1- 19 504 019
- DE-C1- 10 001 068

## Beschreibung

### Stand der Technik

Die Erfindung betrifft eine Sensiervorrichtung, insbesondere beim Abgeben von Pulver in Hartgelatinekapseln oder dergleichen, nach dem Oberbegriff des Anspruchs 1. Aus der DE 100 01 068 C1 ist eine Dosiervorrichtung bekannt, die eine schrittweise gedrehte Dosierscheibe umfasst, in deren Grund Bohrungen ausgebildet sind, die mit auf- und abbeweglichen Stopfstempeln zusammenwirken. Die Stopfstempel sind auf einem gemeinsamen Stopfstempelträger angeordnet und pressen beim Eintauchen in die Bohrungen das Pulver zu Presslingen. Um die Brüche von Federn zu erkennen sowie eine Aussage über die Masse der Presslinge treffen zu können, sind Mittel vorgesehen, die den Federweg der Ausstoßstempel am unmittelbar vorgeschalteten Stopfstempel erfassen. In einem Ausführungsbeispiel sind die den Ausstoßstempeln unmittelbar vorgeordneten Stopfstempel jeweils mit einem Wegaufnehmer - wie beispielsweise ein Dehnungsmeßstreifen oder ein induktiv arbeitender Sensor - vorgesehen. Damit können sowohl Brüche der Federn als auch Fehldosierungen erkannt werden.

### Vorteile der Erfindung

Die erfindungsgemäße Sensiervorrichtung mit den kennzeichnenden Merkmalen des Anspruchs 1 hat demgegenüber den Vorteil, daß eine qualitative Aussage über Produktparameter wie Wirkstoffanteil, quantitative Wirkstoffmenge oder Produktmenge ermöglicht wird. Dadurch wird auf einfache Weise eine Produktanalyse der Presslinge ermöglicht, welche bisher außerhalb der Vorrichtung durch eine Analyseeinrichtung erfolgte.

Weitere vorteilhafte Weiterbildungen der erfindungsgemäßen Vorrichtung sind in den Unteransprüchen angegben.

### Zeichnung

Ein Ausführungsbeispiel der Erfindung ist in der Zeichnung dargestellt und wird in der nachfolgenden Beschreibung näher erläutert. Es zeigen:
Figur 1 einen Längsschnitt durch eine Sensiervorrichtung,
Figur 2 eine vereinfachte Darstellung einer auf dem Röhrchen-Prinzip basierenden Pulverdosiervorrichtung mit Sensiervorrichtung sowie
Figur 3 eine genauere schematische Darstellung der Komponenten der Sensiervorrichtung.

### Beschreibung der Ausführungsbeispiele

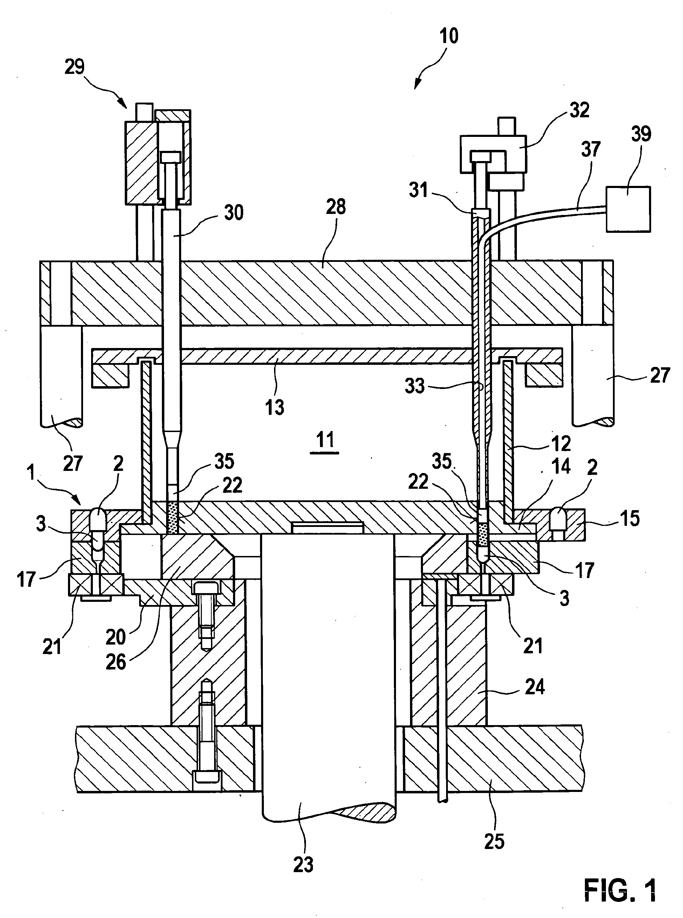

Die in der Figur 1 dargestellte Pulverdosiervorrichtung 10 zum Dosieren und Abgeben von Pulver in Hartgelatinekapseln 1 oder dergleichen weist einen Füllgutbehälter 11 auf. Der Füllgutbehälter 11 ist gebildet von einem Mantel 12, einem Deckel 13 und einer Dosierscheibe 14. In Höhe der Dosierscheibe 14 ist der Füllgutbehälter 11 von einem Ring 15 umfasst, der der Aufnahme von Kapseloberteilen 2 dient. Unterhalb des Ringes 15 sind Segmente 17 vorgesehen, die für die Aufnahme von Kapselunterteilen 3 entsprechend ausgebildet sind. Die Segmente 17 sind um jeweils einen im Ring 15 befestigten, nicht dargestellten Bolzen schwenkbar gelagert, und werden beim Umlauf durch eine feststehende Kurve 20 über eine Kurvenrolle 21 den Erfordernissen entsprechend nach innen, das heißt unter Bohrungen 22 der Dosierscheibe 14, oder nach außen, das heißt über den Umfang des Ringes 15 hinaus, bewegt. Die Dosierscheibe 14 ist auf einer Welle 23 befestigt, die mit dem Antrieb der Vorrichtung 10 gekoppelt ist, und die die Dosierscheibe 14 schrittweise um jeweils einen Winkelbetrag weiterdreht.

Zur Befestigung der Kurve 20 ist ein zweiter Ring 24 vorgesehen, der seinerseits auf der Tischplatte 25 der Vorrichtung 10 befestigt ist. Zwischen der Kurve 20 und der Dosierscheibe 14 ist ein Zwischenring 26 vorgesehen, der durch nicht dargestellte Einstellmittel gegen die Unterseite der Dosierscheibe 14 preßbar ist. Dieser Zwischenring 26 dient zur Abdichtung der Bohrungen 22 der Dosierscheibe 14 im Bereich der Pulverdosierung.

Wie Figur 1 weiterhin zeigt, ist oberhalb des Füllgutbehälters 11 ein mittels Säulen 27 auf- und abbewegbarer Träger 28 angeordnet, der jeweils einen bestimmten Hub ausführt. Auf einem Teilkreis des Trägers 28 sind in gleichmäßigen Winkelabständen mehrere Stopfstempelträger 29, beispielsweise drei Stopfstempelträger 29 angeordnet, in denen jeweils fünf Stopfstempel 30 geführt sind, die den Deckel 13 des Füllgutbehälters 11 in entsprechenden Bohrungen durchdringen. Weiterhin sind auf dem Träger 28 Ausstoßstempel beziehungsweise Übergabestempel 31 angeordnet, die mit einem auf dem Träger 28 angeordneten Halter 32 höhenverstellbar verbunden sind. Die Übergabestempel 31 sind innerhalb des Füllgutbehälters 11 von einem Pulverabweiskörper 33 umgeben. In der Spitze des Übergabestempels 31 ist ein Sensor 35 angeordnet zur Erfassung von Produktparameter wie Wirkstoffanteil, quantitative Wirkstoffmenge oder Produktmenge. Der Sensor 35 ist vorzugsweise optisch (Infrarot) ausgeführt. Eine Glasfaserleitung 37 ist in einer Ausnehmung des Übergabestempels 31 angeordnet, um das optische Signal des Sensors 35 einer Signalauswertung 39 zuzuführen.

Die oben beschriebene Vorrichtung 10 arbeitet wie folgt: Zum Bilden der Preßlinge in den Bohrungen 22 aus dem in dem Füllgutbehälter 11 befindlichen Pulver wird die Dosierscheibe 14 taktweise im Uhrzeigersinn jeweils unter die Stopfstempel 30 eines Stopfstempelträgers 29 gedreht. Anschließend dringen die Stopfstempel 30 bei einer Abwärtsbewegung des Trägers 28 in die Bohrungen 22 der Dosierscheibe 14, wobei das sich in der Bohrung 22 befindliche Pulver verdichtet wird. Während des Verdichtens bzw. Pressens des Pulvers bildet der Zwischenring 26 ein Gegenlager für die Stopfstempel 30 bzw. das Pulver. Anschließend werden die Stopfstempel 30 mittels des Trägers 28 wieder aus den Bohrungen 22 der Dosierscheibe 14 herausgefahren, worauf die Dosierscheibe 14 in den Bereich des nächsten Stopfstempelträgers 29 gedreht wird. Nach dem letzten Pressvorgang gelangen die so gebildeten Preßlinge in den Bereich der Übergabestempel 31, wo sie in die mittels der Segmente 17 bereitgestellten Kapselunterteile 3 eingeschoben werden. Anschließend werden die Kapselunterteile 3 mit den Kapseloberteilen 2 wieder zusammengeführt.

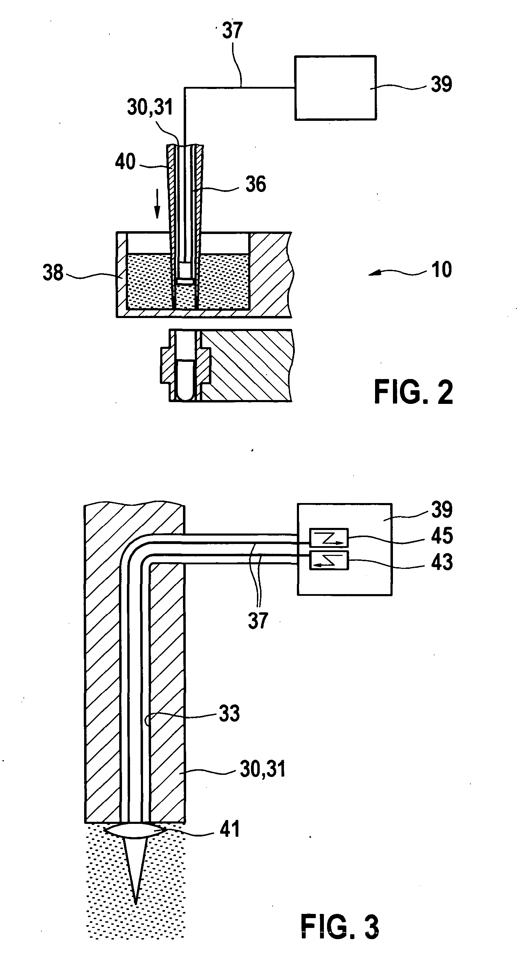

In Figur 2 ist beispielhaft eine auf dem Röhrchen-Prinzip basierende Pulverdosiervorrichtung mit Sensoranordung dargestellt. Der aus einem Zylinder 40 (Röhrchen) und einem Kolben 36 bestehende Stopfstempel 30 wird in einen Drehbehälter 38 bis auf den über den Segmentbehälter (manuell oder mittels Stellantrieb) eingestellten Produktstand abgesenkt. Anschließend wird der Zylinder 40 in die Produktschicht abgesenkt, während der Kolben 36 die eigene Position beibehält und die vorher an allen Dosierern gleichzeitig eingestellte Dosierkammer bildet. Der so eingestellte Dosierer wird bis auf den Boden des Drehbehälters 38 abgesenkt, bis die Dosierkammer gefüllt ist. Falls für das betreffende Produkt erforderlich kann nun über die Einstellung des speziellen Nockens (manuell oder mittels Stellantrieb) die gewünschte Verdichtung erfolgen. Anschließend kann bevorzugt die Sensierung erfolgen zur weiteren Auswertung und Bestimmung der interessierenden Produktparameter. Danach fährt der Kolben 36 nach oben und wird etwas vom Formling beziehungsweise Pressling abgehoben. Anschließend werden die Dosierer erneut über den Drehbehälter 38 angehoben und vertikal mit den Kapselunterteilen in den Buchsen ausgerichtet. Anschließend wird der Kolben abgesenkt und das Produkt in das Kapselunterteil 3 gefüllt. Es schließt sich ein neuer Dosierzyklus an.

Figur 3 zeigt nun in genauerer Darstellung den prinzipiellen Aufbau der Sensiereinrichtung im Schnitt. In dem Stopfstempel 31 oder Übergabestempel 30 ist in der Mitte eine vorzugsweise zylinderförmige Ausnehmung 33 vorgesehen, die in Richtung der Achse des Stempels 30, 31 verläuft und in einer Öffnung in der Spitze des Stempels 30, 31 ausläuft. In der Ausnehmung sind zwei Glasfaserkabel 37 angeordnet. Das eine der Glasfaserkabel 37 ist mit einem optischen Sender 43, das andere Glasfaserkabel 37 ist mit einem optischen Empfänger 45 verbunden. Optischer Sender 43 und optischer Empfänger 45 sind in einer Signalerfassung 39 integriert, die vorzugsweise mit einer Ansteuerelektronik und Auswerteeinheit ausgestattet ist. Die Signalerfassung 39 ist vorzugsweise an einer von den Stempeln 30, 31 entfernten Stelle angeordnet. Die Glasfaserkabel 37 leiten optische Strahlung in das Produkt und empfangen die vom Produkt reflektierte Strahlung über eine Optik 41. Die Optik 41 ist vorzugsweise in oder an der Öffnung des Stempels 30, 31 angeordnet.

Als Optik 41 ist vorzugsweise eine Konvexlinse verwendet. Dadurch ergibt sich ein Brennpunkt, der innerhalb des Presslings liegt, nicht jedoch an dessen Oberfläche. Dadurch beinträchtigen Verschmutzungen der Optik 41 im Prinzip nicht die Qualität der Signalerfassung. Die Signalerfassung 39 startet einen Messvorgang, wenn der Stempel 30, 31 innerhalb eines Bearbeitungsschritts eine bestimmte Position erreicht. Dann wird der optische Sender 43 so angesteuert, dass er für eine bestimmte Dauer optische Strahlung an eine der Glasfasern 37 abgibt. Diese gelangt über die Glasfaser 37 und die Optik 41 in das Produkt, beispielsweise den Pulverpressling. Das Produkt reflektiert einen Teil der eingeleiteten Strahlung. Die reflektierte Strahlung gelangt über die Optik 41 und das zweite Glasfaserkabel 37 zu dem optischen Empfänger 45, der die optischen Signale in elektrische umsetzt. Die Signalerfassung 39 wertet nun die die empfangenen Signale in Abhängigkeit von den gesendeten Signalen aus. Hierbei wird auf bekannte Methoden der Spektralanalyse zurückgegriffen, bei der die Wellenspektren der empfangenen Strahlung ausgewertet werden. Qualitative Aussagen über Produktparameter wie Wirkstoffanteil, quantitative Wirkstoffmenge oder Produktmenge werden dadurch ermöglicht. Vorzugsweise wird Strahlung im Infrarotbereich ausgesendet.

Anstelle der Signalein- und Ausleitung mittels Glasfaserkabeln 37 könnten Sender 43 und Empfänger 45 bereits im Stempel 30, 31 direkt angeordnet sein und die Signale auf anderem Wege, beispielsweise elektrisch oder drahtlos mit der Signalverarbeitung 39 ausgetauscht werden.

## Patentansprüche

1. Sensiervorrichtung, mit einer Pulverdosiereinrichtung (10) zum Abgeben von Pulver in Hartgelatinekapseln (1) oder dergleichen, wobei die Pulverdosiereinrichtung (10) zumindest einen Stempel (30) zur Verdichtung des Pulvers zu einem Pulverpressling und/oder zumindest einen Übergabestestempel (31) umfasst, der den zuvor gebildeten Pulverpressling in ein bereitstehendes Kapselteil (3) überschiebt, **dadurch gekennzeichnet, daß** Mittel zum Einleiten und Empfangen (37, 41) von durch das Pulver oder den Pulverpressling geleiteten Strahlung vorgesehen sind, die mit dem Stempel (30) oder dem Übergabestempel (31) verbunden sind.

2. Vorrichtung nach Anspruch 1, **dadurch gekennzeichnet, daß** in dem Übergabestempel (31) und/oder Stempel (30) zumindest eine Ausnehmung (33) vorgesehen ist, in der die Mittel zum Einleiten und Empfangen (37, 41) der Strahlung angeordnet sind.

3. Vorrichtung nach einem der vorhergehenden Ansprüche, **dadurch gekennzeichnet, daß** als Mittel zum Einleiten und Empfangen der Strahlung eine Optik (41) verwendet ist.

4. Vorrichtung nach einem der vorhergehenden Ansprüche, **dadurch gekennzeichnet, daß** als Mittel zum Einleiten und Empfangen der Strahlung zumindest ein Glasfaserkabel (37) verwendet ist.

5. Vorrichtung nach einem der vorhergehenden Ansprüche, **dadurch gekennzeichnet, daß** ein optischer Sender (43) und Empfänger (45) vorgesehen sind, die mit den Mittel zum Einleiten und Empfangen (37, 41) der Strahlung in Verbindung steht.

6. Vorrichtung nach einem der vorhergehenden Ansprüche, **dadurch gekennzeichnet, daß** der Messvorgang der empfangenen Strahlung während oder unmittelbar nach dem Verdichten des Pulvers erfolgt.

7. Vorrichtung nach einem der vorhergehenden Ansprüche, **dadurch gekennzeichnet, daß** eine Signalverarbeitung (39) vorgesehen ist, die in Abhängigkeit von der empfangenen Strahlung die Menge, Wirkstoffmenge und/oder Wirkstoffanteil des Pulvers oder Pulverpresslings ermittelt.

8. Vorrichtung nach einem der vorhergehenden Ansprüche, **dadurch gekennzeichnet, daß** die Signalverarbeitung (39) in Abhängigkeit von der empfangenen Strahlung die Menge, Wirkstoffmenge und/oder Wirkstoffanteil des Pulvers oder Pulverpresslings ermittelt durch Spektralanalyse.

9. Vorrichtung nach einem der vorhergehenden Ansprüche, **dadurch gekennzeichnet, daß** die Optik (41) als Konvexlinse ausgeführt ist.

## Claims

1. Sensing facility, with a powdered dispensing device (10) for dispensing powder into hard gelatin capsules (1) or the like, the powder dispensing device (10) comprising at least one die (30) for compacting the powder into a powder compact and/or at least one transfer die (31), which pushes the previously formed powder compact over into an awaiting capsule part (3), **characterized in that** means for introducing and receiving (37, 41) radiation conducted through the powder or the powder compact are provided and are connected to the die (30) or the transfer die (31).

2. Facility according to Claim 1, **characterized in that** at least one clearance (33), in which the means for introducing and receiving (37, 41) the radiation are arranged, is provided in the transfer die (31) and/or the die (30).

3. Facility according to one of the preceding claims, **characterized in that** an optical system (41) is used as the means for introducing and receiving the radiation.

4. Facility according to one of the preceding claims, **characterized in that** at least one fibre-optic cable (37) is used as the means for introducing and receiving the radiation.

5. Facility according to one of the preceding claims, **characterized in that** an optical transmitter (43) and receiver (45), which are in connection with the means for introducing and receiving (37, 41) the radiation, are provided.

6. Facility according to one of the preceding claims, **characterized in that** the operation of measuring the received radiation is performed during or immediately after the compacting of the powder.

7. Facility according to one of the preceding claims, **characterized in that** a signal processing system (39), which determines the amount, amount of active ingredient and/or proportion of active ingredient of the powder or powder compact in accordance with the radiation received, is provided.

8. Facility according to one of the preceding claims, **characterized in that** the signal processing system (39) determines the amount, amount of active ingredient and/or proportion of active ingredient of the powder or powder compact in accordance with the radiation received by spectral analysis.

9. Facility according to one of the preceding claims, **characterized in that** the optical system (41) is configured as a convex lens.

## Revendications

1. Système de détection doté d'un dispositif (10) de dosage de poudre qui délivre de la poudre dans des gélules (1) en gélatine dure ou similaires,
le dispositif (10) de dosage de poudre comportant au moins un poussoir (30) qui compacte la poudre en une ébauche de poudre et/ou au moins un poussoir de transfert (31) qui repousse dans une partie de gélule (3) en attente l'ébauche de poudre préalablement formée,
**caractérisé en ce que**
le système présente un moyen d'amenée et un moyen de réception (37, 41) d'un rayonnement amené à travers la poudre ou l'ébauche de poudre, ces moyens étant reliés au poussoir (30) ou au poussoir de transfert (31).

2. Dispositif selon la revendication 1, **caractérisé en ce qu'**au moins une découpe (33) dans laquelle le moyen d'amenée et le moyen de réception (37, 41) du rayonnement sont disposés est prévue dans le poussoir de transfert (31) et/ou dans le poussoir (30).

3. Dispositif selon l'une des revendications précédentes, **caractérisé en ce qu'**une optique (41) est utilisée comme moyen d'amenée et moyen de réception du rayonnement.

4. Dispositif selon l'une des revendications précédentes, **caractérisé en ce qu'**au moins un câble (37) en fibres de verre est utilisé comme moyen d'amenée et moyen de réception du rayonnement.

5. Dispositif selon l'une des revendications précédentes, **caractérisé en ce qu'**il présente un émetteur optique (43) et un récepteur optique (45) qui communiquent avec le moyen d'amenée et le moyen de réception (37, 41) du rayonnement.

6. Dispositif selon l'une des revendications précédentes, **caractérisé en ce que** l'opération de mesure du rayonnement reçu a lieu pendant ou immédiatement après le compactage de la poudre.

7. Dispositif selon l'une des revendications précédentes, **caractérisé en ce qu'**un traitement (39) du signal qui détermine en fonction du rayonnement reçu la quantité, la quantité de substance active et/ou la teneur en substance active de la poudre ou de l'ébauche de poudre est prévu.

8. Dispositif selon l'une des revendications précédentes, **caractérisé en ce que** le traitement (39) du signal détermine en fonction du rayonnement reçu la quantité, la quantité de substance active et/ou la teneur en substance active de la poudre ou de l'ébauche de poudre par analyse spectrale.

9. Dispositif selon l'une des revendications précédentes, **caractérisé en ce que** l'optique (41) est configurée comme lentille convexe.
